# EUROPEAN PATENT APPLICATION

(11) **EP 4 772 361 A1**
(43) Date of publication of application: **08.07.2026**
(21) Application number: 25226298.5
(22) Date of filing: 22.12.2025
(51) Int. Cl.: B60B 27/00

(54) **WHEEL BEARING RETENTION AND ALIGNMENT**

(30) Priority: 31.12.2024 US 202419007412
(71) Applicant: ArvinMeritor Technology, LLC, Troy, MI 48084 (US)
(72) Inventor: Rengasamy, Srinivasa, Troy, 48084 (US)
(74) Representative: Whitfield, Jack Stephen

(57) **Abstract**

A tang on a spindle nut washer of a wheel end assembly facilitates retention and alignment of bearing and seal components within a wheel hub during installation and removal of the hub onto and/or from a wheel spindle. In one embodiment, the tang protrudes from an outer circumferential portion of the washer to interact with a circumferential slot in the wheel hub. The washer is installed within the hub at an offset orientation to position the tang within the slot, which assures axial retention of the washer within the hub. The washer can then engage an outboard wheel bearing cone to facilitate wheel hub installation on the spindle, and can also facilitate subsequent hub removal from the spindle. Upon completion of wheel end assembly, the washer thickness can also provide confirmation that wheel bearings and seal components are fully seated to recommended bearing preload and/or wheel end play limits.

## Description

### FIELD

This application claims priority to US Patent Application 19/007412 filed at the USPTO on 31 December 2024 entitled "Wheel bearing retention and alignment". The present disclosure relates to wheel end assemblies, and specifically to systems, apparatus, and methods for retention of bearing components in wheel hubs to maintain alignment of components contained within the wheel hubs during wheel end disassembly and reassembly for inspection, adjustment, repair, and/or replacement.

### BACKGROUND

Wheel end assemblies of vehicles, particularly those of heavy-duty trucks associated with highway tractor trailers, include components often subject to harsh operational conditions and road contaminants. As such and principally for reasons of safety, the components which include sets of bearings may be periodically disassembled and inspected for wear and/or replacement to enhance their life cycles.

Wheel ends include wheel hubs configured to rotate about fixed axles or spindles. At their outboard ends, each hub is axially secured to a spindle by a spindle nut, the nut being threaded on the spindle against an associated spindle washer. The hub is rotatably supported on the spindle by bearings which permit the hub to rotate freely about the spindle. Most hubs contain a pair of bearings, often tapered roller bearings having two different sized diameters on the ends of a set of rollers. Each bearing is referenced with respect to its positioning on the spindle as either inboard or outboard, and includes a bearing cone defining an inner raceway. The cone is one of two detachable parts of a tapered roller bearing, the other being an outer raceway or cup.

Numerous efforts have been made to avoid undesirable dislodgement of wheel end components from hubs during transfers between workstations for disassembly and/or reassembly of bearing components for repair or replacement. For example, US Patent 10,919,338 B2 teaches a wheel end assembly 100 in which an alignment insert 135 is used to facilitate retention and alignment of an outboard bearing assembly 120 until the wheel assembly is placed on its spindle 5. Additional systems and methods have been practiced, as those skilled in the art may appreciate.

Conventional alignment systems, apparatus, and methods have had limited success. Ideally, improvements would include at least 1) an ability to physically capture outboard wheel bearing cones during wheel end installation and disassembly, and 2) a physical indication of when a wheel end has been accurately installed in accordance with predetermined bearing preload and wheel endplay limits.

### SUMMARY

In one aspect of this disclosure, a system enables retention of a plurality of wheel end bearing components during disassembly and/or reassembly. The system includes a wheel hub containing bearing components within an interior of the wheel hub rotatable about a wheel spindle, the spindle defining a rotational axis of the components. The hub includes a circumferentially extending slot about its outboard interior. A spindle washer has an outside diameter (OD) and an interior diameter (ID), and includes a tang that protrudes radially from its OD. The tang and slot are dimensioned to support their interaction, such that when the washer is installed in the wheel hub, the tang enters the slot to provide axial retention of the washer within the hub. The washer can then facilitate insertion and/or removal of the hub and wheel end components onto or from the spindle without disturbing alignment of the components.

In another aspect of this disclosure, wheel end assembly apparatus retains wheel end bearing components within an interior of a wheel hub during installation or removal of the wheel hub from a wheel spindle. The wheel spindle supports the wheel hub on the bearing components for rotation of the hub about the spindle. The apparatus supports the alignment of bearing components contained within the wheel hub, and for this purpose the hub includes a circumferentially oriented slot within its interior. A spindle washer is secured to the spindle, and the washer has a tang protruding radially from a portion of its outer periphery. The tang is configured to interact with the slot, the tang and slot having cooperative dimensions, such that after the washer is inserted into the wheel hub the tang interacts with the slot to axially retain the washer within the hub. The retained washer enables insertion and/or removal of the hub and wheel end components onto or from the spindle without disturbing alignment of the components.

In yet another aspect of this disclosure, a method of retaining wheel end bearing components within a wheel hub of a wheel end assembly during installation or removal of the hub from a wheel spindle is presented. The method includes:
a) providing a circumferentially oriented slot in an outboard interior diameter of a wheel hub; and
b) providing a tang on an outer periphery of a spindle washer, the tang configured to engage the circumferentially oriented slot and axially retain the washer in the hub.

Axial retention of the bearing components by the washer within the wheel hub during installation or removal of the wheel hub from the spindle assures maintaining alignment of the bearing components within the wheel hub.

In more detail:

In an aspect of the disclosure, a system is provided for retaining a plurality of wheel end bearing components within a wheel hub during disassembly and/or reassembly of the components from and/or on a wheel spindle, the wheel hub configured for rotation about the spindle, the wheel spindle defining a rotational axis of the components. The system comprises: the wheel hub having an interior portion, the components contained within the interior portion; the wheel hub further having a circumferentially oriented slot extending about the interior portion; and a spindle washer having an outside diameter (OD), the washer having a tang extending radially from its OD; wherein the tang and slot are dimensioned to support cooperative interaction, such that as the washer is installed in the wheel hub, the tang enters the slot to provide axial retention of the washer within the hub.

The wheel end bearing components may comprise an outboard bearing and an inboard bearing, and the bearings may support rotation of the hub about the wheel spindle.

The system may further comprise a spindle nut operatively connected to the spindle washer to define a coupled spindle nut and washer, and the spindle nut may enable axial securement of the hub and bearing components on the wheel spindle.

Installation of the coupled spindle nut and washer into the hub may be achieved by offsetting the coupled spindle nut and washer from the rotational axis to accommodate insertion of the tang into the slot.

The outboard bearing may include a bearing cone supported in a bearing cup, such that when the washer is axially positioned in the hub, the washer may engage the outboard bearing cone to facilitate wheel end installation and disassembly.

The system may further comprise a bearing seal positioned adjacent the inboard bearing.

The tang may extend circumferentially about the washer in a range of substantially 90 to 215 degrees.

The coupled spindle nut and washer may comprise a ratcheting assembly.

The tang may consist of two distinct rectangular projections, each extending at least 90 degrees circumferentially apart from the other.

The wheel spindle may include an axially extending keyway, and the washer may include a radially extending tab configured to engage the keyway.

In a further aspect of the disclosure, an apparatus is provided for retaining wheel end bearing components contained within a wheel hub during installation and/or removal of the wheel hub onto and/or from a wheel spindle, the wheel spindle supporting the wheel hub on the bearing components for rotation of the hub about the spindle. The apparatus comprises: a wheel end assembly including the wheel hub, the wheel hub including a circumferentially oriented slot; the wheel hub containing the bearing components; and a spindle washer configured to be interactive with the spindle, the washer having a tang extending radially from a portion of an outer periphery of the washer; wherein the slot extends circumferentially about an interior of the hub, and the tang is configured to interact with the slot, the tang and slot having cooperative dimensions such that after the washer is inserted into the wheel hub the tang engages the slot and axially retains the washer in the hub.

The bearing components may comprise an outboard bearing, an inboard bearing, and a bearing seal, and the bearings may support rotation of the hub about the wheel spindle.

The apparatus may further comprise a spindle nut, and the spindle nut and the spindle washer may be separate components.

The washer may comprise an outside diameter (OD), the tang may protrude radially from the OD of the washer and extend circumferentially about the OD of the washer over a range of substantially 90 to 215 degrees, and the slot may extend 360 degrees about the interior of the hub.

In a further aspect of the disclosure, a method is provided for retaining wheel end bearing components within a wheel hub of a wheel end assembly during installation or removal of the hub from a wheel spindle. The method comprises: providing a circumferentially oriented slot in an outboard interior of a wheel hub; and providing a tang on the outer periphery of a spindle washer, the tang protruding radially from a portion of the washer, the tang configured to engage the circumferentially oriented slot; wherein upon insertion of the washer into the wheel hub, the tang will engage the slot and axially retain the washer in the hub to thereby retain the bearing components within the wheel hub during installation or removal of the wheel hub from the spindle to maintain alignment of the bearing components within the wheel hub.

The wheel hub may define a rotational axis, and the bearing components may support rotation of the hub about the rotational axis.

The bearing components may include an inboard bearing, an outboard bearing, and a bearing seal, and the bearing seal may be adjacent the inboard bearing.

The method may further include providing a spindle nut, wherein each of the inboard and outboard bearings may comprise, respectively, an inboard bearing cup and inboard bearing cone, and an outboard bearing cup and an outboard bearing cone, and the spindle nut and the spindle washer may be operatively connected to define a coupled spindle nut and washer in which the spindle nut ratchets relative to the spindle washer at a predetermined torque threshold.

The slot may extend 360 degrees about the interior of the hub.

In a further aspect of the disclosure, a method is provided for assembling a wheel hub on a wheel spindle, the wheel hub containing bearing components comprising inboard and outboard bearings, each bearing including a bearing cone. The method includes steps of: installing the bearing components, including the outboard bearing cone, into the wheel hub; positioning the hub on the wheel spindle, the spindle including a keyway, the hub including a circumferential slot in an outboard interior thereof; positioning a coupled spindle nut and spindle washer into the hub along an axis that is offset from a rotational axis of the hub, the spindle washer including a tang on an outer periphery thereof, and a tab on an interior diameter thereof; advancing the coupled spindle nut and washer into the hub until the tang engages the slot; manipulating the coupled spindle nut and washer to assure that the tab engages the keyway; and rotating the spindle nut of the coupled spindle nut and washer to progress hub installation on the spindle until the spindle nut ratchets against the spindle washer; wherein the washer captures the outboard bearing cone to assure axial retention of the bearings within the hub, and alignment of the bearings on the spindle.

### BRIEF DESCRIPTION OF THE DRAWINGS

The foregoing and other features and advantages will be discussed in detail in the following non-limiting description of specific embodiments in connection with the accompanying drawings, in which:
Figure 1 is an exploded cutaway view of a prior art wheel hub assembly.
Figure 2 is an exploded cutaway view of an embodiment of a wheel hub assembly having structures that may be constructed in accordance with this disclosure.
Figure 3 is an assembled cutaway view of the wheel hub assembly of Figure 2.
Figure 3A is an elevational side view of a coupled spindle nut and washer included in the wheel hub assembly Figure 3.
Figure 4 is an assembled cutaway view of the wheel hub assembly similar to that of Figure 3, but with the coupled spindle nut and washer shown in an angled orientation during installation.
Figure 5 is a perspective cross-sectional view of a wheel spindle configured to accommodate a wheel hub, as may be employed in accordance with this disclosure.
Figure 6 is a perspective view of an outboard nose portion of the wheel spindle of Figure 5
Figure 7 is a fully assembled cutaway view of the wheel hub assembly similar to that of Figure 3, but shown supported on the wheel spindle of Figure 5.
Figure 8 is an elevational face view of an embodiment of a coupled spindle nut and washer, as may be constructed in accordance with this disclosure.
Figures 9A and 9B depict an alternate embodiment of a coupled spindle nut and washer, with Figure 9A reflecting an off-center entry of the washer into the wheel hub, and Figure 9B showing the washer centered within the wheel hub after its installation.

### DETAILED DESCRIPTION OF PRESENT EMBODIMENTS

As used herein, phrases substantially similar to "at least one of A, B or C" are intended to be interpreted in the disjunctive, i.e., to require A or B or C or any combination thereof unless stated or implied by context otherwise. Further, phrases substantially similar to "at least one of A, B and C" are intended to be interpreted in the conjunctive, i.e., to require at least one of A, at least one of B and at least one of C unless stated or implied by context otherwise. Further still, the term "substantially" or similar words requiring subjective comparison are intended to mean "within manufacturing tolerances" unless stated or implied by context otherwise.

As used herein, the phrase "operatively connected" refers to at least a functional relationship between two elements and may encompass configurations in which the two elements are directed connected to each other, i.e., without any intervening elements, or indirectly connected to each other, i.e., with intervening elements.

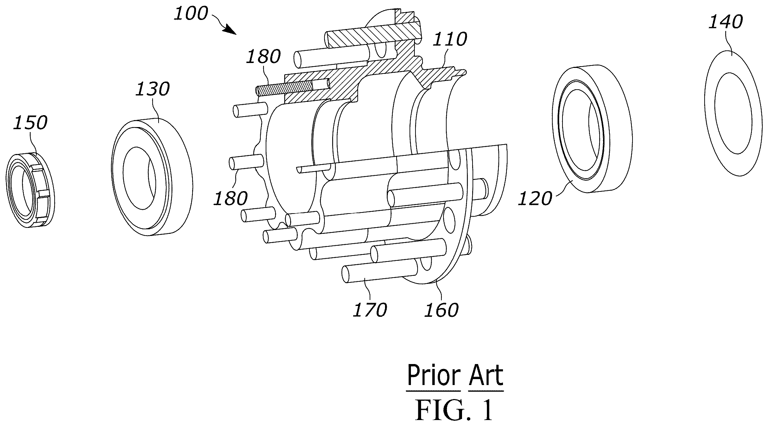

An exploded cutaway view of a prior art wheel hub assembly 100 is shown in Figure 1. The assembly 100 includes a wheel hub 110, inboard and outboard wheel bearings 120 and 130, respectively, and a bearing seal 140, all supported within the hub 110. The assembly 100 also includes a coupled spindle nut and washer 150, which secures the hub to a spindle (not shown), and also provides wheel bearing adjustments once the wheel hub has been assembled to a wheel spindle, as will be appreciated by those skilled in the art.

The wheel assembly 100 contains a wheel hub flange 160 from which extend wheel studs 170 for the mounting of a wheel (not shown) to the wheel hub assembly 100. Oil cap cover studs 180 extend from the hub 110 to secure a cap (not shown) configured to cover an oil or grease reservoir (also not shown) at an outboard end of the hub.

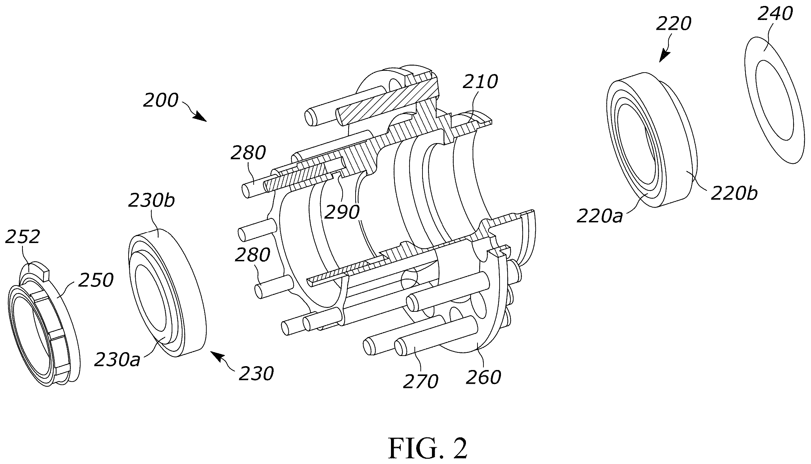

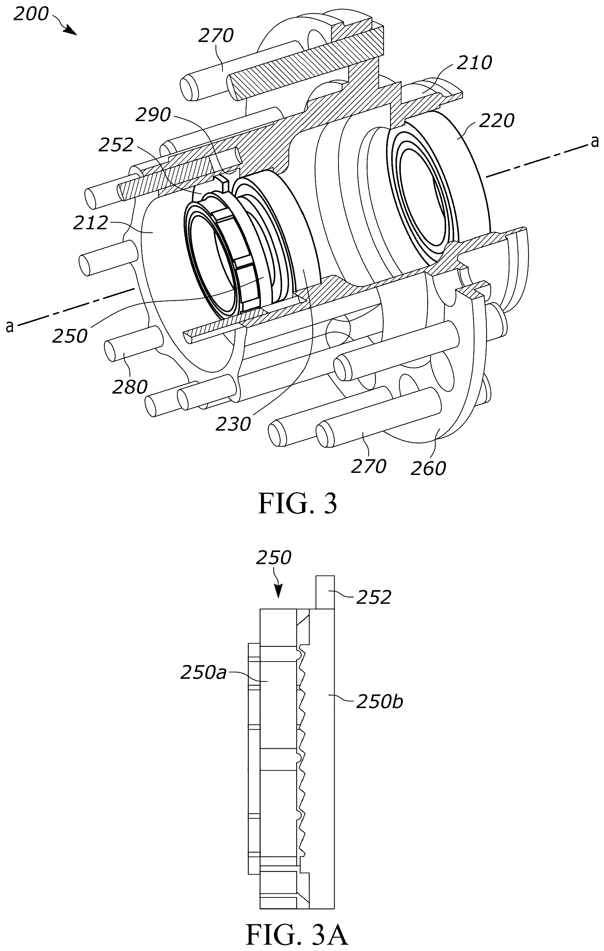

Referring now to Figures 2 and 3, a wheel hub assembly 200 of the present disclosure includes a wheel hub 210 configured to contain and support wheel end bearing components including an inboard wheel bearing 220, an outboard wheel bearing 230, and a bearing seal 240. Each of the bearings 220 and 230 is formed of a cone that is received in a cup. Thus, the inboard bearing 220 includes an inboard bearing cone 220a and a separate cup 220b in which the bearing cone is received. Similarly, the outboard bearing 230 includes an outboard bearing cone 230a received in a bearing cup 230b. The bearing components all share an axis a-a (FIG. 3) of the hub 210. A coupled spindle nut and washer 250 is also shown in Figures 2, 3, and 3A, and includes a washer retention tang 252 that protrudes from an outside diameter (OD) of the washer component 250b (FIG. 3A) for reasons to be described.

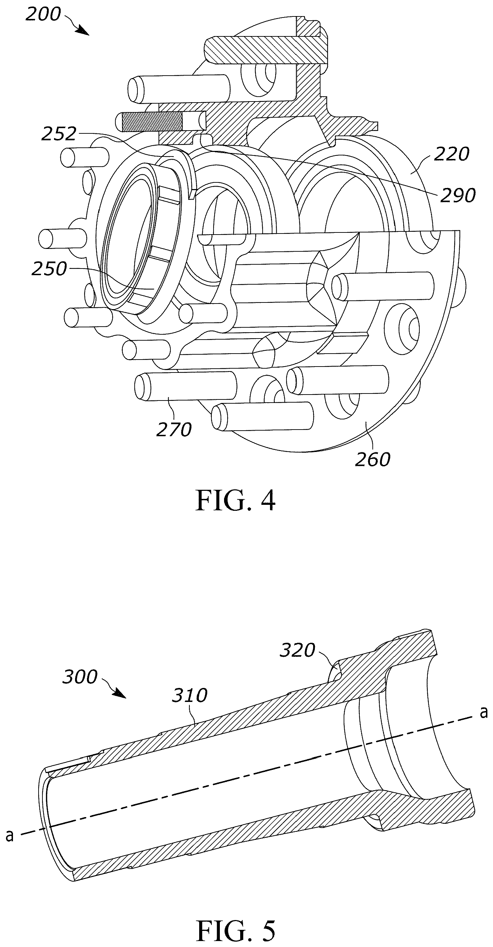

Referring now specifically to Figure 3A, the coupled spindle nut and washer 250 includes a spindle nut 250a and a spindle washer 250b, which are operatively connected together to function as a "torque limiting" nut and washer combination, such as described in US Patent 11,898,587 B2. The spindle nut 250a assures axial securement of the hub 210, along with the noted wheel end bearing components, to the wheel spindle 300 (FIG 5). The torque limiting feature provides a ratchet function between the spindle nut and washer components, which can provide audible and tactical assurance that a predetermined torque threshold for a given bearing preload has been met.

The wheel hub 210 also includes a wheel hub flange 260 from which extend wheel studs 270 to accommodate mounting of a wheel (not shown). In addition, axially outboard of the studs 270 are oil cap cover studs 280 for securing a cover (not shown) of an outboard bearing lubrication reservoir (not shown).

In the wheel hub assembly 200 of this disclosure, the wheel hub 210 contains a circumferential hub groove or slot 290 (FIG. 3) which is dimensioned and/or configured to receive the washer retention tang 252. The tang extends from 90 to 215 degrees about the OD of the spindle washer 250b, and the tang 252 and slot 290 are dimensioned to support cooperative interaction. The washer 250b is installed into the wheel hub 210 in a manner such that the tang 252 enters the slot 290, which extends 360° in an outboard interior diameter (ID) 212 of the hub 210 to assure axial retention of the washer 250b in the hub. Axial retention of the washer aids the insertion and/or removal of the hub and the wheel end bearing components onto or from a wheel spindle 300 (FIG 5) without disturbing alignment of the components, as further detailed herein.

Figure 4 is a view of the coupled spindle nut and washer 250 being installed into the hub, shown oriented at an offset angle from the hub axis a-a (FIG. 3). If not offset, the tang 252 may create an interference with the outboard ID 212 of the hub. Thus, orienting the coupled spindle nut and washer 250 in the manner shown will assure unobstructed entry of the tang into the slot 290 to achieve desired retention of the washer 250b.

Figure 5 is a view of a spindle 300 on which the wheel hub assembly 200 of Figure 3 may be installed. The spindle 300 and the hub assembly 200 share the same axis a-a. The non-rotary spindle 300 is secured by a flange portion 320 to a fixed, i.e., non-rotary, vehicular structure, such as a steering knuckle (not shown). The spindle includes a tubular portion 310 which supports the wheel hub 210 (FIG. 3) and the bearings 220, 230 that support rotation of the wheel hub on the spindle.

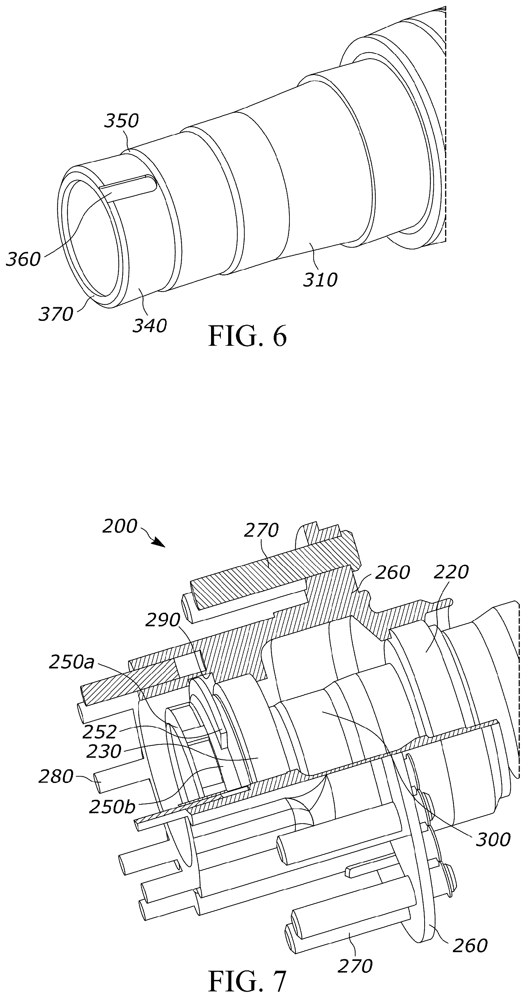

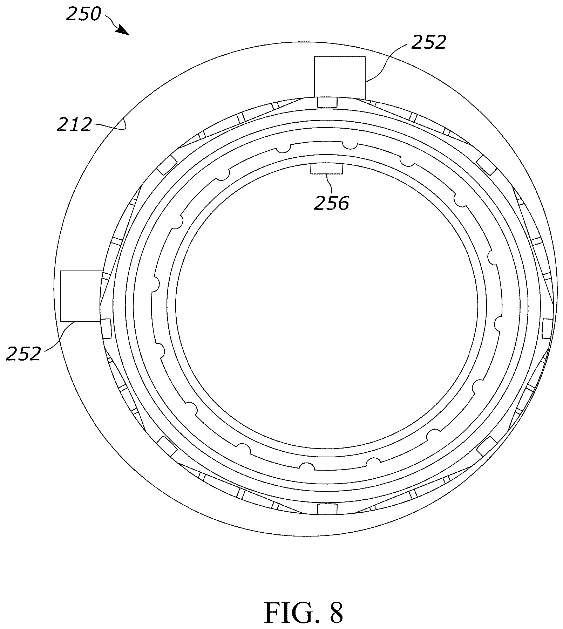

Referring now to Figure 6, the tubular portion 310 of the spindle 300 includes a threaded portion 340 on an outboard or nose end 370. A circumferential abutment 350 constitutes an axial boundary of the threaded portion 340. The nose end 370 receives the threaded spindle nut 250a to secure the hub 210 on the spindle 300. A keyway 360 defines a slot for receipt of an interior diameter (ID) tab 256 (FIG 8) on the washer 250b configured to fix the washer against rotation about the spindle.

Figure 7 provides a view of the fully assembled wheel hub assembly 200 (FIG 3) installed on the spindle 300.

The above-described washer retention feature provides that the washer engages the outboard wheel bearing cone 230a during installation of the wheel hub onto the spindle 300. Engagement of the washer with the outboard wheel bearing cone 230a, in conjunction with applying a washer 250b of a predetermined thickness, can be effective for assuring that the wheel hub assembly is accurately positioned on the spindle, and that that wheel bearings and seal components are fully seated to their recommended bearing preload and/or wheel end play limits. Confirmation of a secure and accurate installation can be indicated when the coupled spindle nut and washer have ratcheted. In addition, the system and apparatus as disclosed assures retention of the bearing components within the wheel hub during removal of the hub for servicing the bearing components.

Bearing seals can be fragile, and are often damaged during installation and seating of bearings. As apparent in Figure 2, the bearing seal when properly positioned within the hub will be mounted in the inner-most position on the spindle. As such, it is positioned adjacent the inboard bearing, and can be subject to axial forces during the wheel hub installation process. The axially retained spindle washer of this disclosure can promote reduction of impact forces that might otherwise be deleteriously transferred to the bearing seal during docking and seating of the bearings after the seal has been mounted on the spindle.

Figure 8 is a face view of one embodiment of the coupled spindle nut and washer 250 that includes a pair of the tangs 252 on the OD of the spindle washer 250b, as well as the ID tab 256 of the washer noted earlier in reference to Figure 6. Figure 8 also shows the outboard ID 212 of the hub in reference to the coupled spindle nut and washer 250, and thus reveals an alternate approach for offsetting without employing the tilted orientation depicted in Figure 4.

Under the alternate approach the coupled spindle nut and washer is installed into the outboard ID 212 of the hub while positioned orthogonally with respect to, but radially offset from, the axis a-a, until the tangs 252 reach the slot 290 (FIG. 3) to accommodate insertion, at which point the washer can be centered on the axis a-a. In the embodiment of Figure 8, the tangs 252 are oriented radially outwardly 90° apart from each other. In other embodiments, the tangs 252 may be oriented as much as 215° apart from each other.

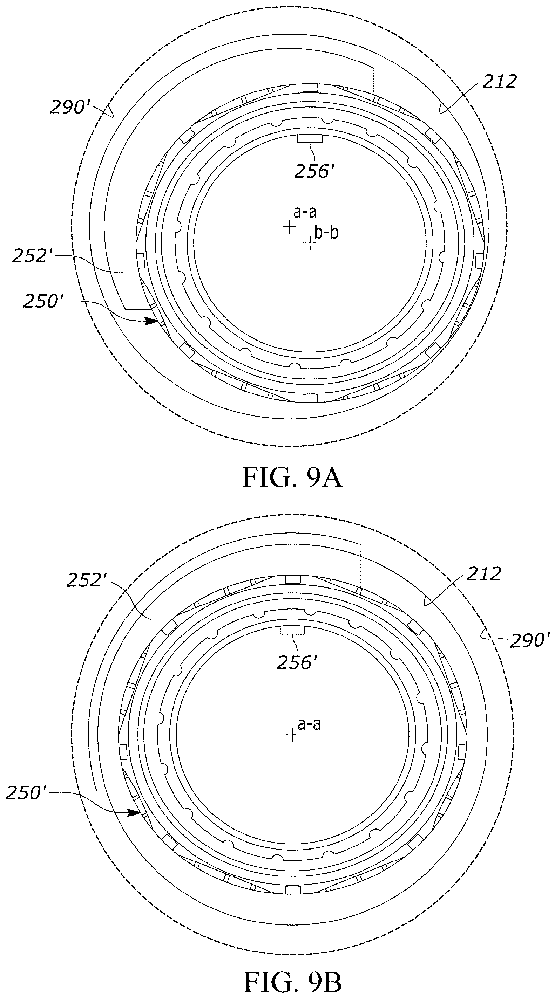

Figures 9A and 9B depict an alternate embodiment of a coupled spindle nut and washer 250' on which the washer 250b includes a single or unitary tang 252'. Figure 9A shows prior to installation of the tang into the hub groove or slot 290', with the coupled spindle nut and washer positioned on an offset axis b-b, spaced radially from axis a-a, similar to that described in reference to the embodiment of Figure 8. Figure 9B is an after-installation view of the tang 252' within the slot 290', with the coupled spindle nut and washer having been shifted from axis b-b to become aligned with axis a-a. It will be appreciated that this version of the washer 250b also incorporates a washer ID tab 256' for keyway engagement, similar to the embodiment described in reference to Figure 6.

It will be appreciated by those skilled in the art that dimensions of the washer tang 252, 252' and the hub slot 290, 290' will be such that the slot will be wider and deeper than the tang. This will avoid potential interference, because the washer 252, 252' is fixed to the non-rotary spindle via the ID tab 256, 256', while the slot as an integral part of the hub will rotate with the hub about the spindle. In at least one iteration, the tang may project radially outwardly from the OD of the washer by 2 to 3 millimeters, an amount determined sufficient to retain the washer from being dislodged from the hub during movement between assembly stations. In addition, use of square corners on the tangs, as depicted, can minimize unintended rotation of the tang within the hub slot during movement of the hub and bearing components between stations, while allowing easy rotation and repositioning of the washer for aligning the ID tab 256 with the spindle keyway 360 during wheel end assembly.

In accordance with this disclosure, the washer tangs 252, 252' may be formed as integral parts of the washer 250b, for example by stamping, or by adhesively applying separate tang structures to the washer after the washer has been formed. This disclosure contemplates that either approach will result in the tang being formed as an integral part of the washer. As such, the washer and the tag will exist as one integral part rather than as separate components.

The above-disclosed embodiments have incorporated a coupled spindle nut and washer 250, 250' which not only has the capacity of securing a hub to a spindle, but also incorporates a preset torque ratcheting capability for simplifying wheel bearing adjustments compared to adjustments achieved with non-coupled spindle nut and washer components. However, this disclosure is also intended to also cover non-coupled subassemblies; i.e., those that are not operatively connected. Thus, separate spindle nut and spindle washer components (not shown) may also be employed without departure from the teachings of the instant disclosure.

This disclosure also offers methods of installing and removing a wheel hub 210 to and from a spindle 300 in a manner that assures desired retention and improved alignment of the bearings 220, 230 contained within the hub. In one exemplary method of assembling the wheel hub to the spindle, and prior to the wheel hub 210 being installed onto the spindle 300, the outboard bearing cone 230a is installed into the hub prior to insertion of the coupled spindle nut and washer 250. The coupled spindle nut and washer may then be inserted using one of the offset methods described above. Once the tang 252 has engaged the slot 290, and the coupled spindle nut and washer has been centered within the hub slot 290, the ID tab 256 on the washer 250b is positioned to engage the keyway 360, requiring only minor manipulation of the washer to achieve. After the ID tab 256 is aligned with the keyway, the threaded spindle nut 250a is rotated onto the threaded portion 340 of the spindle 300 to progress hub installation on the spindle. As the wheel hub and its bearing components are secured on the spindle by simple rotation of the spindle nut 250a, the outboard bearing cone 230a is captured by the washer 250b in a manner that assures the hub is aligned for proper seating of the bearings, and that minimizes potential damage to the spindle bearing seal.

As further contemplated in this disclosure, the threaded spindle nut 250a will be configured to engage the threaded portion 340 of the spindle, so that the coupled washer 250b will be axially arrested by the outboard bearing cone 230a, causing the operatively connected nut 250a to then ratchet against the washer 250b at a predetermined bearing preload threshold.

Finally, a manufacturing method for retaining wheel end bearing components within a wheel hub of a wheel end assembly during installation or removal of the hub from a wheel spindle includes:
a) providing a circumferentially oriented slot in an outboard interior diameter of a wheel hub; and
b) providing a tang on an outer periphery of a spindle washer, the tang configured to engage the circumferentially oriented slot and axially retain the washer in the hub.

Axial retention of the bearing components by the washer within the wheel hub during installation or removal of the wheel hub from the spindle can better assure that alignment of the bearing components within the wheel hub are maintained.

While the various embodiments in accordance with the instant disclosure have been described in conjunction with specific implementations thereof, it is evident that alternatives, modifications, and variations will be apparent to those skilled in the art. For example, shapes, sizes, and various configurations of the disclosed structures may be varied without departure from the intended spirit and scope of the invention. Accordingly, the disclosed embodiments set forth herein are intended to be illustrative only and not limiting, so long as the variations thereof fall within the scope of the appended claims and their equivalents.

## Claims

1. A system for retaining a plurality of wheel end bearing components within a wheel hub during disassembly and/or reassembly of the components from and/or on a wheel spindle, the wheel hub configured for rotation about the spindle, the wheel spindle defining a rotational axis of the components; the system comprising:
the wheel hub having an interior portion, the components contained within the interior portion;
the wheel hub further having a circumferentially oriented slot extending about the interior portion; and
a spindle washer having an outside diameter (OD), the washer having a tang extending radially from its OD;
wherein the tang and slot are dimensioned to support cooperative interaction, such that as the washer is installed in the wheel hub, the tang enters the slot to provide axial retention of the washer within the hub.

2. The system of claim 1, wherein the wheel end bearing components comprise an outboard bearing and an inboard bearing, and wherein the bearings support rotation of the hub about the wheel spindle.

3. The system of claim 1 or claim 2, further comprising a spindle nut operatively connected to the spindle washer to define a coupled spindle nut and washer, and wherein the spindle nut enables axial securement of the hub and bearing components on the wheel spindle, optionally wherein installation of the coupled spindle nut and washer into the hub is achieved by offsetting the coupled spindle nut and washer from the rotational axis to accommodate insertion of the tang into the slot.

4. The system of claim 2, wherein the outboard bearing includes a bearing cone supported in a bearing cup, such that when the washer is axially positioned in the hub, the washer can engage the outboard bearing cone to facilitate wheel end installation and disassembly.

5. The system of claim 2, further comprising a bearing seal positioned adjacent the inboard bearing.

6. The system of any previous claim, wherein the tang extends circumferentially about the washer in a range of substantially 90 to 215 degrees.

7. The system of claim 3, wherein the coupled spindle nut and washer comprises a ratcheting assembly.

8. The system of claim 6, wherein the tang consists of two distinct rectangular projections, each extending at least 90 degrees circumferentially apart from the other.

9. The system of any previous claim, wherein the wheel spindle includes an axially extending keyway, and the washer includes a radially extending tab configured to engage the keyway.

10. Apparatus for retaining wheel end bearing components contained within a wheel hub during installation and/or removal of the wheel hub onto and/or from a wheel spindle, the wheel spindle supporting the wheel hub on the bearing components for rotation of the hub about the spindle; the apparatus comprising:
a wheel end assembly including the wheel hub, the wheel hub including a circumferentially oriented slot;
the wheel hub containing the bearing components; and
a spindle washer configured to be interactive with the spindle, the washer having a tang extending radially from a portion of an outer periphery of the washer;
wherein the slot extends circumferentially about an interior of the hub, and the tang is configured to interact with the slot, the tang and slot having cooperative dimensions such that after the washer is inserted into the wheel hub the tang engages the slot and axially retains the washer in the hub.

11. The apparatus of claim 10, wherein the bearing components comprise an outboard bearing, an inboard bearing, and a bearing seal, and wherein the bearings support rotation of the hub about the wheel spindle.

12. The apparatus of claim 10 or claim 11, further comprising a spindle nut, and wherein the spindle nut and the spindle washer are separate components, and/or wherein the washer comprises an outside diameter (OD), the tang protrudes radially from the OD of the washer and extends circumferentially about the OD of the washer over a range of substantially 90 to 215 degrees, and wherein the slot extends 360 degrees about the interior of the hub.

13. A method of retaining wheel end bearing components within a wheel hub of a wheel end assembly during installation or removal of the hub from a wheel spindle; the method comprising: providing a circumferentially oriented slot in an outboard interior of a wheel hub; and
providing a tang on the outer periphery of a spindle washer, the tang protruding radially from a portion of the washer, the tang configured to engage the circumferentially oriented slot;
wherein upon insertion of the washer into the wheel hub, the tang will engage the slot and axially retain the washer in the hub to thereby retain the bearing components within the wheel hub during installation or removal of the wheel hub from the spindle to maintain alignment of the bearing components within the wheel hub.

14. The method of Claim 13, wherein the wheel hub defines a rotational axis, and wherein the bearing components support rotation of the hub about the rotational axis, optionally
wherein the bearing components include an inboard bearing, an outboard bearing, and a bearing seal, and wherein the bearing seal is adjacent the inboard bearing, optionally, further including providing a spindle nut, wherein each of the inboard and outboard bearings comprise, respectively, an inboard bearing cup and inboard bearing cone, and an outboard bearing cup and an outboard bearing cone, and wherein the spindle nut and the spindle washer are operatively connected to define a coupled spindle nut and washer in which the spindle nut ratchets relative to the spindle washer at a predetermined torque threshold, optionally, wherein. the slot extends 360 degrees about the interior of the hub.

15. A method of assembling a wheel hub on a wheel spindle, the wheel hub containing bearing components comprising inboard and outboard bearings, each bearing including a bearing cone; the method including steps of:
installing the bearing components, including the outboard bearing cone, into the wheel hub; positioning the hub on the wheel spindle, the spindle including a keyway, the hub including a circumferential slot in an outboard interior thereof;
positioning a coupled spindle nut and spindle washer into the hub along an axis that is offset from a rotational axis of the hub, the spindle washer including a tang on an outer periphery thereof, and a tab on an interior diameter thereof;
advancing the coupled spindle nut and washer into the hub until the tang engages the slot; manipulating the coupled spindle nut and washer to assure that the tab engages the keyway; and rotating the spindle nut of the coupled spindle nut and washer to progress hub installation on the spindle until the spindle nut ratchets against the spindle washer;
wherein the washer captures the outboard bearing cone to assure axial retention of the bearings within the hub, and alignment of the bearings on the spindle.
